Europäisches Patentamt

European Patent Office

Office européen des brevets

(19)

(11) Veröffentlichungsnummer: **0 224 605 B1**

# (12) EUROPÄISCHE PATENTSCHRIFT

(45) Veröffentlichungstag der Patentschrift: **25.09.91**

(21) Anmeldenummer: **85115286.8**

(22) Anmeldetag: **02.12.85**

(51) Int. Cl.⁵: **G03B 15/00**, G03B 17/26, G01C 11/02

(54) **Filmmagazin.**

(43) Veröffentlichungstag der Anmeldung:
**10.06.87 Patentblatt 87/24**

(45) Bekanntmachung des Hinweises auf die Patenterteilung:
**25.09.91 Patentblatt 91/39**

(84) Benannte Vertragsstaaten:
**DE FR GB**

(56) Entgegenhaltungen:
**US-A- 4 143 971**

**The Focal Encyclopedia of Photography, London 1978, page 1217**

(73) Patentinhaber: **Honeywell Regelsysteme GmbH
Kaiserleistrasse 55
W-6050 Offenbach am Main(DE)**

(72) Erfinder: **Liem, Khoen T.
Am Würgebach 16
W-6460 Gelnhausen 4(DE)**

(74) Vertreter: **Herzbach, Dieter et al
Honeywell Europe S.A. Holding KG Patent- und Lizenzabteilung Kaiserleistrasse 55
Postfach 184
W-6050 Offenbach am Main(DE)**

## Beschreibung

Die vorliegende Erfindung bezieht sich auf ein Filmmagazin nach dem Gattungsbegriff des Patentanspruches 1.

Ein derartiges Filmmagazin findet insbesondere Anwendung in einem Aufklärungsflugzeug, das beim Überfliegen eines Geländes mittels einer bekannten Infrarot-Zeilenabtasteinrichtung ein Wärmebild des überflogenen Geländes erfaßt. Die Signale von Infrarot-Detektoren steuern hierbei ihrerseits Laserdioden an, deren Ausgangssignale über einen holographischen Scheibenabtaster in der Filmebene des Filmmagazins abgebildet werden. Bei Verwendung eines speziellen Filmes, wie z.B. eines Trockensilberfilms, kann durch Wärmeeinwirkung der Film bereits an Bord des Flugzeuges entwickelt werden. Die Filmaufzeichnungsgeschwindigkeit ist von der Geschwindigkeit v des Flugzeuges und der Höhe h desselben über der betrachteten Fläche abhängig. Für ein konstantes Verhältnis v/h ergibt sich eine konstante Filmaufzeichnungsgeschwindigkeit.

Prinzipiell kann man den entwickelten Film an Bord betrachten, und es wäre beispielsweise möglich, den Film mit einer TV-Kamera zu betrachten und das entsprechende Bild dem Navigator auf einer Kathodenstrahlröhre darzustellen. Die festliegende Filmgeschwindigkeit verhindert dann aber beispielsweise die Betrachtung eines stehenden Bildes oder die Rückholung eines bereits betrachteten Bildausschnittes.

Es ist daher die Aufgabe der vorliegenden Erfindung, ein Filmmagazin so auszugestalten, daß die Auswertung des Filmes unabhängig von der Filmaufzeichnungsgeschwindigkeit erfolgen kann.

Die Lösung dieser Aufgabe gelingt gemäß den kennzeichnenden Merkmalen des Patentanspruches 1. Weitere vorteilhafte Ausgestaltungen des erfindungsgemäßen Filmmagazins sind den Unteransprüchen entnehmbar.

Anhand von in den Figuren der beiliegenden Zeichnung dargestellten Ausführungsbeispielen sei im folgenden die Erfindung näher erläutert. Es zeigen:

Figur 1    das erfindungsgemäße Filmmagazin und eine zugehörige Aufzeichnungseinheit in einem Blockdiagramm;

Figur 2    eine gerätetechnische Ausführung der Anordnung gemäß Figur 1; und

Figur 3    eine Vorrichtung zur Manipulation der Filmbetrachtungsgeschwindigkeit in näheren Einzelheiten.

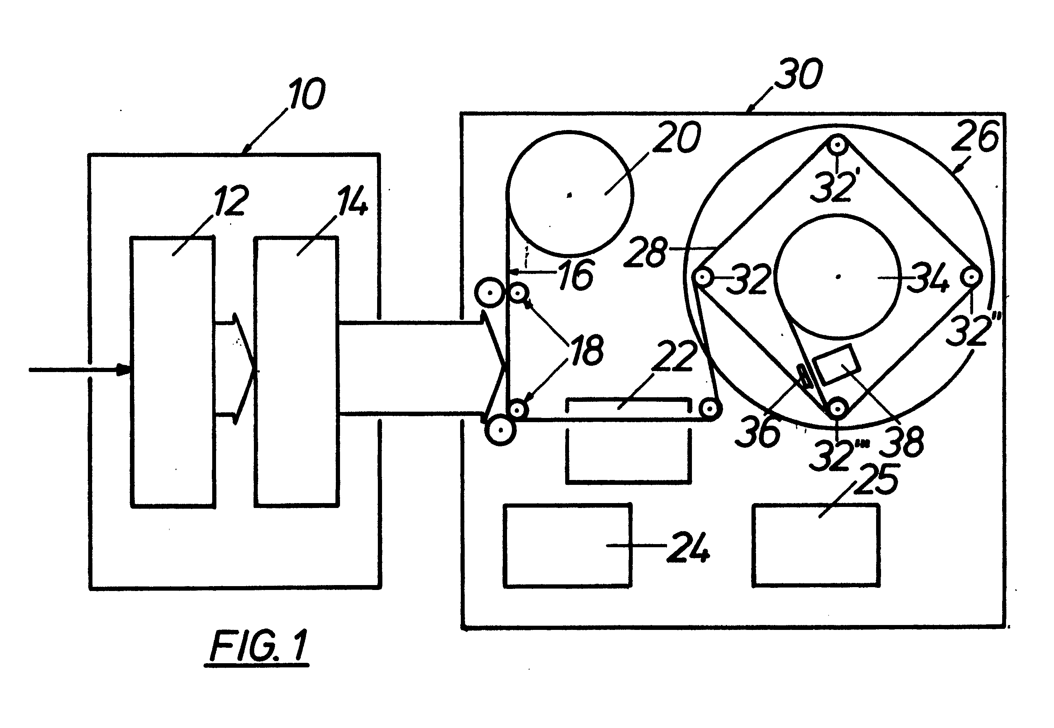

Gemäß Figur 1 werden die auf 64 nicht dargestellten Infrarot-Detektoren empfangenen Bildsignale nach entsprechender Verstärkung und Formatierung einer Aufzeichnungseinheit 10 zugeführt, wobei die 64 Kanäle an eine Anordnung 12 bestehend aus 64 Laserdioden angeschlossen sind. Die Ausgangssignale der Laserdioden werden durch einen rotierenden holographischen Scheibenabtaster 14 in einer Ebene in einem Filmmagazin 30 abgebildet, in der sich ein Film 16 befindet. Der Film wird von einer geeigneten Filmtransporteinrichtung 18 von einer Filmvorratsspule 20 abgezogen, um nach seiner Belichtung einer thermischen Entwicklerstation 22 zugeführt zu werden. Bei dem Film handelt es sich um einen Trockensilberfilm, auf dem das belichtete Bild durch Wärmeeinwirkung fixierbar ist. Die Filmaufzeichnungsgeschwindigkeit $v_1$ hängt von v/h (v = Flugzeuggeschwindigkeit; h = Höhe über Boden) ab und wird durch eine Steuereinheit 24 gesteuert.

Von der Entwicklerstation 22 wird der Film 16 mit der Filmaufzeichnungsgeschwindigkeit $v_1$ einem Filmmanipulator 26 zugeführt, der eine Auswertung (Betrachtung) des Films während des Flugs gestattet.

Der Filmmanipulator 26 besteht aus einer Speichertrommel 28, auf der Rollen 32, 32', 32" und 32''' drehbar gelagert sind, um die der Film geführt ist. Die Rollen sind in einem Quadrat angeordnet, in dessen Innerem eine Filmaufwickelspule 34 gelagert ist. Die Speichertrommel 28 und die Filmaufwickelspule 34 sind relativ zueinander in beiden Richtungen drehbar. Von einer Rolle 32'''wird die unterste Lage des Films 16 der Filmaufwickelspule 34 zugeführt. Hierbei wird der Film 16 zwischen einer Lichtquelle 36 und einer Kamera 38 hindurchgeführt. Die Relativbewegung zwischen der Speichertrommel 28 und der Filmaufwickelspule 34 und damit die Bildmanipulation wird beispielsweise durch einen nicht dargestellten Steuerknüppel von dem Navigator gesteuert, wobei eine weitere Steuereinheit 25 über geeignete Antriebe auf die Speichertrommel 28 und die Filmaufwickelspule 34 einwirkt. Beispielsweise kann man, wie man leicht erkennt, das ausgewählte Bild einfrieren, wenn man die Filmaufwickelspule 34 anhält und die Speichertrommel 28 so schnell dreht, daß sie den aus der Entwicklerstation 22 auslaufenden Film 16 aufwickelt.

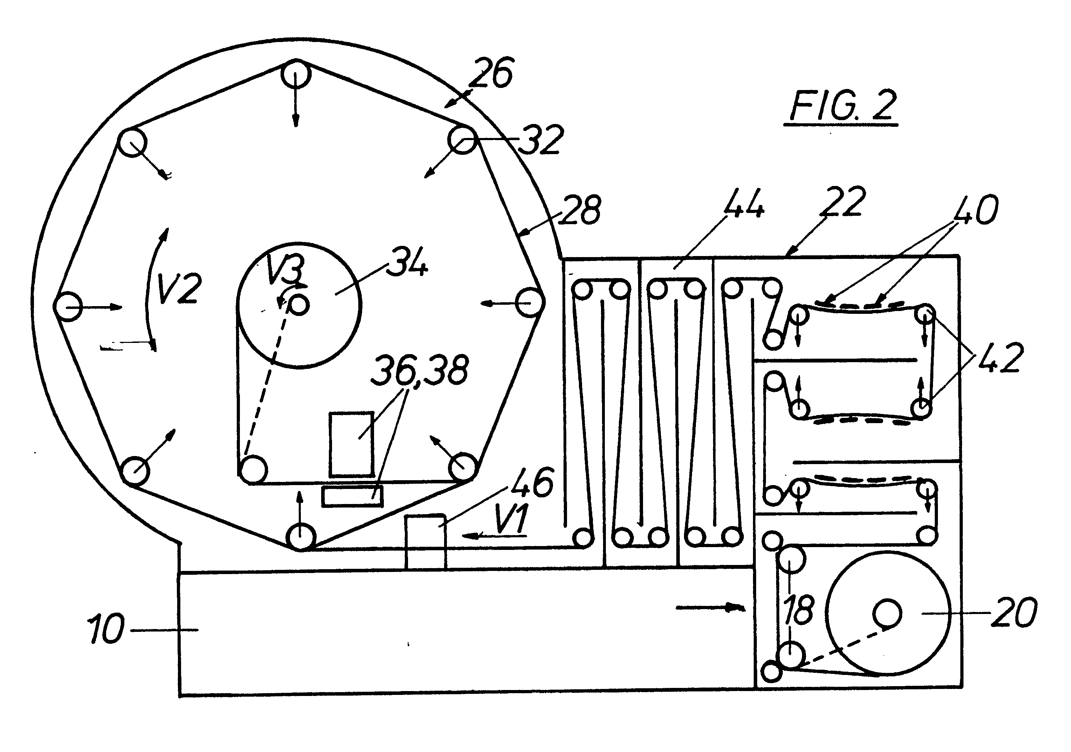

Gemäß Figur 2 ist eine gerätetechnische Ausgestaltung des Blockschemas gemäß Figur 1 dargestellt. Die Aufzeichnungseinheit 10 belichtet den von der Filmvorratsspule 10 mittels der Filmtransporteinrichtung 18 abgezogenen Film, um diesen nachfolgend segmentierten Heizelementen 40 in der Entwicklerstation 22 zuzuführen. Die Entwicklerstation 22 weist in einer thermisch isolierten Kammer neben den segmentierten Heizelementen 40 Rollen 42 auf, die beweglich sind, wie dies durch Pfeile angedeutet ist, um je nach der vorliegenden Filmaufzeichnungsgeschwindigkeit den Film mit mehr oder weniger segmentierten Heizelementen 40 in Kontakt zu bringen. Von der Entwicklerstation 22 wird der Film einer Kühlkammer 44 zugeführt, um sodann über eine Rücklaufsperre 46 dem Filmmanipulator 26 zugeführt zu werden. Dieser Filmmanipulator 26 unterscheidet sich lediglich durch die Anzahl der Rollen 32 von dem in Figur 1 gezeigten Manipulator. Hier sind die Rollen 32 gemäß einem Oktogon angeordnet, wodurch die Speichertrommel 28 näher an die Kreisform angenähert wird.

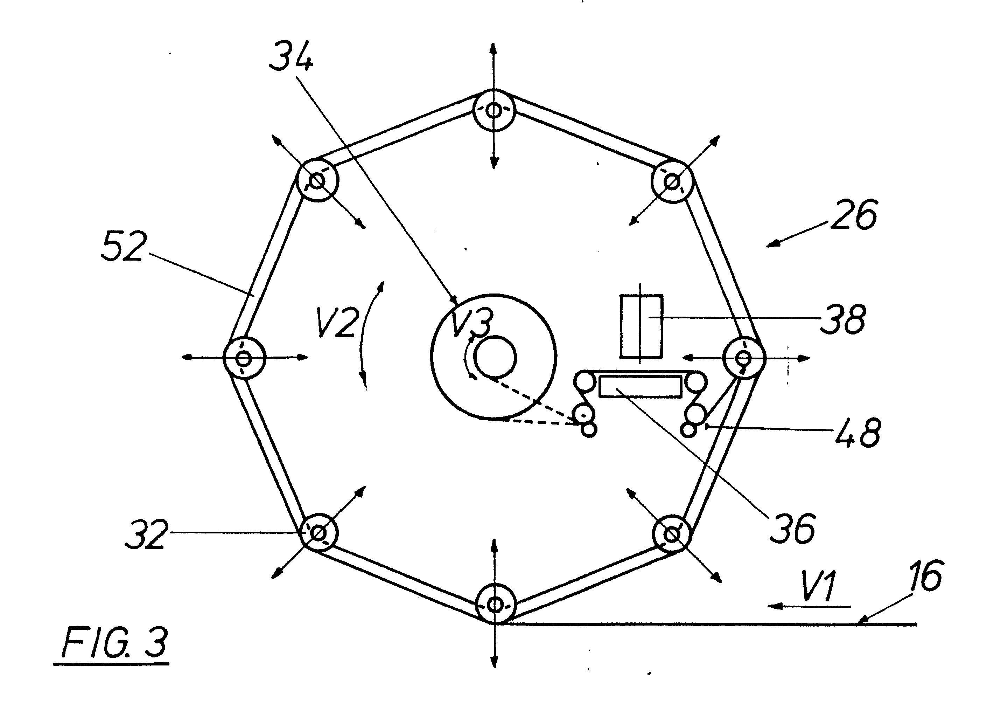

Figur 3 zeigt den Filmmanipulator 26 nochmals in näheren Einzelheiten. Dieser umfaßt eine Plattform 48. Auf der Plattform 48 sind einzelne Rollen 32 wiederum in einem Oktogon angeordnet, wobei jede Rolle 32 um ihre Achse rotieren kann und eine begrenzte radiale Bewegung ausführen kann. Auf der Plattform 48 sind als Lichtquelle 36 ein Lichttisch sowie als Kamera 38 eine TV-Kamera mit Zoomlinse angeordnet. Ferner ist auf der Plattform 48 die Filmaufwickelspule 34 drehbar gelagert. Die Filmaufwickelspule 34 kann unabhängig von der Plattform 48 rotieren. Der Film 16 wird, wenn er von der Entwicklerstation kommt, über die Rollen 32 geführt, wodurch sich ein gewisser Filmvorrat 52 ergeben könnte, und er wird sodann um eine Rolle zugeführt und über den Lichttisch 36 der Filmaufwickelspule 34 zugeführt.

Durch Wahl der Relativgeschwindigkeit zwischen Filmaufwickelspule und Speichertrommel sind folgende Betriebsweisen bei der Auswertung des Films möglich:

1. Betrachtungsgeschwindigkeit entspricht Filmaufzeichnungsgeschwindigkeit - bei dieser Betriebsweise entspricht die Drehgeschwindigkeit der Filmaufwickelspule im Uhrzeigersinn der Filmgeschwindigkeit und die Speichertrommel wird nicht gedreht ($v_2 = 0$).

2. Verlangsamte Auswertung - hierbei wird die Drehgeschwindigkeit der Filmaufwickelspule im Uhrzeigersinn herabgesetzt und die fehlende Filmaufnahme durch eine Drehbewegung der Speichertrommel im Uhrzeigersinn kompensiert ($v_2 > 0$).

3. Bildeinfrierung (feststehendes Bild) - wenn ein bestimmter Bereich des aufgenommenen Bildes näher betrachtet werden soll, so wird kein Film auf die Filmaufwickelspule aufgewickelt, und die Speichertrommel rotiert im Uhrzeigersinn so schnell, daß sie unter Aufrechterhaltung der Filmspannung den aus der Entwicklerstation kommenden Film aufnimmt ($v_1 = v_2$).

4. Schneller Vorwärtslauf - wenn nach einer bestimmten Zeitdauer der Betrachter den gerade aufgenommenen Film betrachten möchte, so wird die Speichertrommel im Gegenuhrzeigersinn und die Filmaufwickelspule im Uhrzeigersinn, angetrieben, so daß die Filmbetrachtungsgeschwindigkeit größer als die Filmaufzeichnungsgeschwindigkeit ist.

5. Rückwärtslauf - wenn zu einem späteren Zeitpunkt der Betrachter einen bestimmten Bereich des zuvor aufgenommenen Films betrachten möchte, so wird die Drehgeschwindigkeit der Speichertrommel im Uhrzeigersinn erhöht und die Filmaufwickelspule im Gegenuhrzeigersinn angetrieben.

6. Zoom - während der Bildeinfrierung oder der langsamen Betrachtungsweise kann der Betrachter mit dem Handsteuerknüppel den interessierenden Filmausschnitt auswählen und durch Drücken eines Knopfes auf dem Steuerknüppel den Kamera-Zoommechanismus auslösen. Hierdurch kann von der vollen Auflösung des Filmes Gebrauch gemacht werden.

Während jeder dieser Betriebsarten kann weiterhin Film mit der Geschwindigkeit $v_1$ vom Filmmanipulator 26 aufgenommen werden.

Als Kamera können übliche TV-Kameras verwendet werden, wie beispielsweise eine Vidicon-Röhre oder eine CCD-Einrichtung.

## Patentansprüche

1. Filmmagazin (30) für einen Film (16) mit einer Filmvorratsspule (20) und einer Filmaufwickelspule (34) sowie einer bezüglich des Verlaufs des Films zwischen beiden Spulen angeordneten Filmauswerteeinrichtung (36,38), **dadurch gekennzeichnet,** daß die Filmaufwickelspule (34) auf einer Filmspeichertrommel (28) und konzentrisch zu dieser angeordnet ist, daß die Filmaufwickelspule (34) und die Filmspeichertrommel (28) drehbeweglich sind, wobei die Filmspeichertrommel (20) auf einer Plattform (48) aufgesetzte, ein Vieleck vorgebende Führungsrollen (32) aufweist, über die der Film (16) gewickelt ist, daß die innerste Filmlage von einer der Führunsrollen (32) zu der Filmaufwickelspule (34) geführt ist und daß die Filmauswerteeinrichtung (36,38) ortsfest auf der Plattform (48) angeordnet ist.

2. Filmmagazin nach Anspruch 1, **dadurch gekennzeichnet,** daß die Führungsrollen (32) drehbar gelagert sind und bezüglich der Plattform (48) radial beweglich angeordnet sind.

3. Filmmagazin nach Anspruch 2, **dadurch gekennzeichnet,** daß die Filmauswerteeinrichtung (36,38) im Innern des Vielecks auf der Filmspeichertrommel (28) angeordnet ist.

4. Filmmagazin nach Anspruch 3, **dadurch gekennzeichnet,** daß die Filmauswerteeinrichtung eine gegenüber einer Lichtquelle (36) angeordnete Kamera (38) aufweist, wobei der Film (16) zwischen Lichtquelle (36) und Kamera (38) geführt ist.

5. Filmmagazin nach Anspruch 4, **gekennzeichnet durch** die Verwendung einer Vidicon-Kamera.

6. Filmmagazin nach Anspruch 4, **gekennzeichnet durch** die Verwendung einer CCD-Kamera.

7. Filmmagazin nach einem der Ansprüche 1 bis 6, **dadurch gekennzeichnet,** daß zwischen Filmvorratsspule (20) und Filmspeichertrommel (28) eine Filmaufzeichnungsvorrichtung (10) und eine Filmentwicklungsvorrichtung (22) angeordnet sind.

## Claims

1. Film magazine (30) for a film (16) comprising a film supply reel (20) and a film storage reel (34) as well as a film evaluation device (36,38) arranged with respect to the extension of the film between both reels, **characterized in that** the film storage reel (34) is concentrically arranged on a film storage drum (28), that the film storage reel (34) and the film storage drum (28) are rotatable, whereat the film storage drum (28) comprises guide rollers (32) arranged on a polygon and mounted on a platform (48) with the film (16) being coiled on said guide rollers, that the inner most film layer is fed from one of said guide rollers (32) to the film storage reel (34) and that the film evaluation device (36,38) is stationary mounted on said platform (48).

2. Film magazine according to claim 1, **characterized in that** the guide rollers (32) are rotatably mounted and are radially movable with respect to said platform (48).

3. Film magazine according to claim 2, **characterized in that** the film evaluation device (36,38) is arranged inside of said polygon on said film storage drum (28).

4. Film magazine according to claim 3, **characterized in that** the film evaluation device comprises a camera (38) arranged opposite of a light source (36) whereat the film (16) is guided between said light source (36) and said camera (38).

5. Film magazine according to claim 4, **characterized by** the use of a Vidicon-camera.

6. Film magazine according to claim 4, **characterized by** the use of a CCD-camera.

7. Film magazine according to one of claims 1 to 6, **characterized in that** between the film supply reel (20) and the film storage drum (28) a film recording device (10) and a film development device (22) are arranged.

## Revendications

1. Magasin (30) de film destiné à un film (16) comportant une bobine (20) de réserve de films et une bobine (34) d'enroulement de film, ainsi qu'un dispositif d'évaluation de film (36, 38) relatif à la marche du film et disposé entre les deux bobines, caractérisée en ce que la bobine (34) d'enroulement de film est disposée sur un tambour (28) d'accumulation de film et concentriquement à ce dernier, en ce que la bobine (34) d'enroulement de film et la tambour (28) d'accumulation de film sont mobiles à rotation, le tambour (28) d'accumulation de film comportant des rouleaux de guidage (32), disposés sur une plate-forme (48) et constituant un polygone, sur lesquels le film (16) est enroulé, en ce que la couche la plus intérieure de film est guidée par l'un des rouleaux (32) de guidage vers la bobine (34) d'enroulement de film et en ce que le dispositif (36, 38) d'évaluation de film est disposé de façon fixe sur la plate-forme (48).

2. Magasin de film selon la revendication 1, **caractérisé en ce que** les rouleaux de guidage (32) sont montés à rotation et sont disposés de façon radialement mobile par rapport à la plate-forme (48).

3. Magasin de film selon la revendication 2, **caractérisé en ce que** le dispositif (36: 38) d'évaluation de film est disposé à l'intérieur du polygone sur le tambour (28) d'accumulation de film.

4. Magasin de film selon la revendication 3, **caractérisé en ce que** le dispositif d'évaluation de film comporte une caméra (38) disposée face à une source lumineuse (36) , le film (16) étant guidé entre la source lumineuse (36) et la caméra (38).

5. Magasin de film selon la revendication 4, **caractérisé** par l'utilisation d'une caméra Vidicon.

6. Magasin de film selon la revendication 4, **caractérisé** par l'utilisation d'une caméra à dispositif de transfert de charge (ou CCD).

7. Magasin de film selon l'une des revendications 1 à 6, **caractérisé en ce** qu'un dispositif (10) d'enregistrement de film et un dispositif (22) de développement de film sont disposés entre la bobine (20) de réserve de film et le tambour (28) d'accumulation de film.

**FIG.1**

EP 0 224 605 B1

FIG. 2

EP 0 224 605 B1

FIG. 3

EP 0 224 605 B1